# EUROPEAN PATENT SPECIFICATION

(11) **EP 1 602 281 B1**
(45) Date of publication and mention of the grant of the patent: **02.05.2007**
(21) Application number: 04425389.6
(22) Date of filing: 28.05.2004
(51) Int. Cl.: A21D 13/08, A23L 1/18, A21C 11/16

(54) **Bakery food product based on short pastry having multilayered grid shape, process and apparatus for production thereof**
Fetthaltige Backware in Form von übereinanderliegenden Gitterstrukturen, Apparat und Herstellungsverfahren dazu
Produit de boulangerie cuit à base de pâtisserie contenant de la graisse en forme de grille multi-couches, et appareil et processus de fabrication

(43) Date of publication of application: 07.12.2005
(73) Proprietor: Barilla G. e R. Fratelli S.p.A., 43100 Parma (IT)
(72) Inventor: Morbarigazzi, Nadia Barilla G. e R. Fratelli S.p.A, 43100 Parma (IT); Torricelli, Roberto Barilla G. e R. Fratelli S.p.A, 43100 Parma (IT)
(74) Representative: Zambardino, Umberto

(56) References cited:
- EP-A- 0 920 809
- WO-A-97/25881
- US-A- 4 563 358
- US-A- 5 408 920
- US-A- 5 770 248

## Description

### Field of application

In its general aspect the present invention refers to the food industry sector.

The present invention particularly concerns a bakery food product made of short crust pastry in the shape of a multi-layered grid and a process for its production.

The present invention also concerns an apparatus to carry out a process of the aforementioned type.

### State of the Art

In the wide offering of bakery products made available by the food industry, there is a considerable niche for bakery products based on short crust pastry such as shortbread biscuits, tarts, and the like.

Although the organoleptic and nutritional qualities of such bakery products are well recognized, these products have the severe inconvenience of being rather compact in structure and this is the cause of an unpleasant sensation of heaviness or fullness in the mouth during consumer consumption.

Quite often, in the case of bakery products, such a structure is also associated with a high calorie content, which negatively affects their digestibility characteristics.

Therefore a demand in this sector is that of making available bakery short crust pastry products that are perceived by the consumer's palate as being light in texture and taste and possibly also having a reduced calorie content so as to make them more digestible.

To meet this demand it was thought to give the desired characteristics of lightness to bakery short crust pastry products by manufacturing them in the shape of a grid.

A process for making such a structure is already known from patent application EP 920809 in the area of chocolate production. This document describes, in particular, a multi-layered chocolate filament grid structure that is obtained by loading an adequate chocolate mixture into a casting apparatus equipped with suitable nozzles, moving the casting apparatus first in one direction with respect to a mold, thus allowing the deposition through said nozzles of a first layer of parallel chocolate filaments onto said mold, then moving said apparatus in a second direction forming an angle greater than 0° but less than 180° with the first direction thus allowing the deposition of a second layer of parallel 'strings' that cross over the filaments of said first layer, and then repeating the above described deposition operations depending on the number of chocolate filament layers desired.

The chocolate product thus obtained is said to present good lightness and taste characteristics to the palate during consumption.

However the aforementioned process cannot be applied to the production of a multi-layered grid of short crust pastry mainly because of the different nature of the dough mixtures being dealt with. Indeed, short crust pastry dough mixtures are normally of solid texture and the dough mixture components exhibit high cohesion characteristics. Therefore it is very difficult to obtain the deposition of regular quantities of a short crust pastry dough mixture, which is instead more easily done with mixtures of fluid consistency such as chocolate mixtures.

Such a problem is even more evident when a short crust pastry dough mixture must be cast passing through very small nozzles such as those in the deposition apparatus used to carry out the process described in application EP 920809.

The technical problem underlying the present invention is therefore that of making available a process for the production of a bakery product in the shape of a multi-layered grid of short crust pastry that overcomes the inconveniences mentioned above with reference to the state of the art.

### Summary of the invention

Such a problem is solved by a process for the production of a bakery product in the shape of a multi-layered grid comprising the steps of:
a) Preparing at least one short crust pastry dough mixture comprising dietary fibers from 1% to 6 % by weight on the weight of the dough mixture and at least one phospholipid from 0.5% to 3% by weight on the weight of the dough mixture,
b) Forming, by extrusion of said at least one dough mixture, a number of superimposed layers of short crust pastry dough mixture filaments in which the filaments of each layer extend along a set direction and in which, in each pair of successive superimposed layers, the respective filaments of short crust pastry extend in a different direction so that each filament of the upper layer of said pair of layers crosses over the filaments of the lower layer of said pair of layers, thus obtaining a semi-finished product in the shape of a multi-layered grid,
c) Cooking said semi-finished product in a baking oven.

The present invention is based on having surprisingly found that it is possible to manufacture bakery products of short crust pastry in the shape of multi-layered grids by appropriately formulating starting short crust pastry dough mixtures and extruding such dough mixtures through nozzles of small diameter.

An important aspect of the present invention therefore lies in the formulation of the short crust pastry dough mixtures. In this respect, it is important that the short crust pastry dough mixture according to the invention has a more elastic and plastic consistency than conventional short crust pastry dough mixtures, so that it can be extruded in filament form without any breakage of the filaments.

In this regard, it has been found, surprisingly, that this result can be achieved by ensuring the presence, in the dough mixture formulation, of appropriately selected emulsifiers so as to guarantee an adequate dispersion of the lipid phase of the dough mixture throughout its aqueous phase, and the presence of dietary fibers, which are normally not present in traditional short crust pastry dough mixtures.

More in particular, in the present invention, the dietary fiber content of the short crust pastry dough mixtures varies in percentage from 1% to 6% on the weight of the dough mixture. Advantageously, the dietary fibers act as plasticizers in the dough mixture, ensuring an adequate absorption of the water contained therein.

Furthermore, dietary fibers confer an advantageous beneficial effect on the uniformity of the extrusion.

Preferably, the dietary fibers employed in the short crust pastry dough mixtures of the present invention are insoluble cellulose-based dietary fibers.

It is preferable, in the formulation of the short crust pastry dough mixtures according to the present invention, that the fat content lies between 10-16% by weight on the weight of the dough mixture. In such a way, together with the presence of the above mentioned fibers, the short crust pastry dough mixture obtained has elasticity characteristics adequate for extrusion. An excessive fat content results, instead, in a dough mixture of more fluid consistency that is not suitable for extrusion, as the fat phase of the dough mixture tends to separate out during the compression of the dough mixture inside the extruder.

As already stated, another essential aspect dealing with the formulation of the dough mixtures of the present invention lies in the selection of the appropriate emulsifiers for the dispersion of the fat phase of the dough mixture. In the present invention, the emulsifiers consist of at least one phospholipid added to the mixture in percentages from 0.5 to 3% by weight on the weight of the dough mixture.

Advantageously, the phosopholipids act as appropriate emulsifiers, capable of uniformly dispersing the dough mixture fat phase through its aqueous phase, facilitating the extrusion of the short crust pastry dough mixture.

Preferably, said at least one phospholipid consists of lecithin obtained from whichever source, for example soy lecithin.

Furthermore, it is preferable that the short crust pastry dough mixtures used in the present invention have protein components with an adequate dough mixture texturing action and/or are able to confer to said dough mixture the desired organoleptic characteristics of color and taste.

In this regard, appropriate protein components are preferably selected from the group comprising powdered egg whites, powdered milk, and plant proteins, for example from soy or peas. Preferably, the overall protein content of the short crust pastry dough mixtures used in the present invention is between 1% and 6% by weight on the weight of the dough mixture.

The short crust pastry dough mixture is prepared according to conventional techniques. The technology used is preferably one of mixing the ingredients with liquid portions in different steps in a vertical planetary mixer so as to obtain a well structured dough mixture with rheological characteristics suitable for extrusion, in particular of plastic consistency and lump-free.

The preferred mixing technology comprises three mixing steps in which, in the first step, the sugars, the fats and a part of the liquid ingredients, are mixed in a planetary mixer so as to obtain a creamy, well-structured mixture. In the second step, the remaining liquid portions are added to the mixture, and then in the third step the remaining powdered ingredients are added to the mixture.

Preferably, the short crust pastry dough mixtures as described above have a compression value of between 3.2N and 6 N measured with an SMS compressimeter. In this way, short crust pastry dough mixtures can be adequately processed in an extruder and the extrusion of said dough mixtures is regular. Below the minimum value of said compression value range, the dough mixture is too soft and this leads to irregularity in the extrusion.

In the process according to the invention, the formation of a number of superimposed filament layers of short crust pastry dough mixture is carried out using an extrusion apparatus comprising an extruder having a dough mixture processing chamber that communicates overhead with a loading hopper for said dough mixture, and underneath with an extrusion die comprising a plurality of nozzles for the extrusion of the short crust pastry filaments. The processing chamber comprises at least two grooved rollers, operated by a suitable motor, that compress the dough mixture loaded in the hopper and force it towards the extrusion nozzles. The extruder is mobile according to an alternating movement between two end-of-run positions.

Furthermore the apparatus comprises a support to receive the filaments of extruded dough mixture, which preferably consists of a conveyor belt placed underneath the extruder and moving along a running direction essentially perpendicular to the direction of movement of the extruder.

The nozzles in the die can have any section. As a non-limitative example, the section can be circular, oval, square, triangular. In the case of a circular section it is important that the diameter of the hole be greater than 3 mm otherwise the extruded dough mixture filaments are too light and thin for regular deposition onto the support.

Preferably, in the process according to the invention, the extruder moves at a constant speed of between 0.5 and 5 m/minute, the grooved rollers of the dough mixture compression chamber are set to rotate between 1 and 10 rpm, and the conveyor belt is made to run during the deposition steps of the single layers of short crust pastry filaments at a rate of between 0.5 and 5 m/minute.

With such apparatus the step of forming a number of superimposed short crust pastry dough mixture filaments comprises the following operations:
a) Loading said dough mixture into said extruder by means of said loading hopper,
b) Compressing said dough mixture in said compression chamber of the extruder, and extruding the dough mixture from said nozzles so as to form a first layer of filaments substantially parallel to each other on said conveyor belt,
c) Continuing the extrusion of said dough mixture by means of said extruder so as to form a second layer of substantially parallel filaments onto said first filament layer so that the filaments of the second layer cross over the filaments of said first layer,
d) optionally repeating the above described operations of points b) and c) in alternating sequence depending on the number of dough mixture filament layers desired.

Preferably, the formation of the first filament layer and, optionally, of the successive odd order filament layers, is done by extrusion of successive filament bands with simultaneous movement of an extruder, at a set speed from a starting end-of-run position to an arrival end-of-run position, and of a conveyor belt also running at a set speed, along a given direction with a set specific running direction.

Preferably, the formation of the second filament layer and, optionally, of the successive even-order dough mixture filament layers is done by extrusion of successive dough mixture filament bands with the extruder moving from the arrival position to the starting position and the conveyor belt running along said direction but opposite said specific running direction.

Preferably, in the process according to the invention, the extruder moves at a constant speed of between 0.5 and 5 m/minute, the grooved rollers of the dough mixture compression chamber are made to rotate at a speed of between 1 and 10 rpm and the conveyor belt is made to run during the deposition steps of the single filament layers of short crust pastry at a speed of between 0.5 and 5 m/minute. In such a way, dough mixture extrusion is optimal and regular.

According to a preferred embodiment of the process according to the invention, the step of forming a number of superimposed layers of filaments of short crust pastry dough mixture is carried out by means of an apparatus comprising a plurality of extruders arranged in series above a conveyor belt running along a set running direction, each extruder having a roller equipped dough mixture compression chamber in overhead communication with a loading hopper of said at least one dough mixture and in communication below with an extrusion die comprising a plurality of nozzles for the extrusion of filaments of said at least one dough mixture, each extruder moving in an alternating movement between two end-of-run positions in a direction of movement substantially perpendicular to the running direction of the conveyor belt.

Each extruder of said apparatus is used advantageously to form a layer of filaments of short crust pastry dough mixture by the extrusion of successive bands of dough mixture filaments. To carry out the extrusion of each band of successive dough mixture filament bands forming the respective filament layer, each extruder is moved from a starting end-of-run position to an arrival end-of-run position while said conveyor belt runs forward along its own running direction, the starting and the arrival end-of-run positions for the movement of each pair of adjacent extruders being inverted so that the filaments of the successive superimposed layers cross each other.

The characteristics and advantages of the present invention will be clarified in the following description of a preferred embodiment, given as an indicative but not limiting example with reference to the attached drawings in which:
- figure 1 shows a perspective view of an apparatus for carrying out the process according to the invention,
- figure 2 shows a perspective view of the apparatus of figure 1 from a different angle,
- figure 3A shows a top view of the apparatus of figure 1 in a step of operation of the process according to the invention,
- figure 3B shows a top view of the apparatus of figure 1 in another step of operation of the process according to the invention,
- figure 4 shows a side view in partial cross-section of the apparatus of figure 1, and
- figure 5 shows another apparatus for carrying out the process according to the invention.

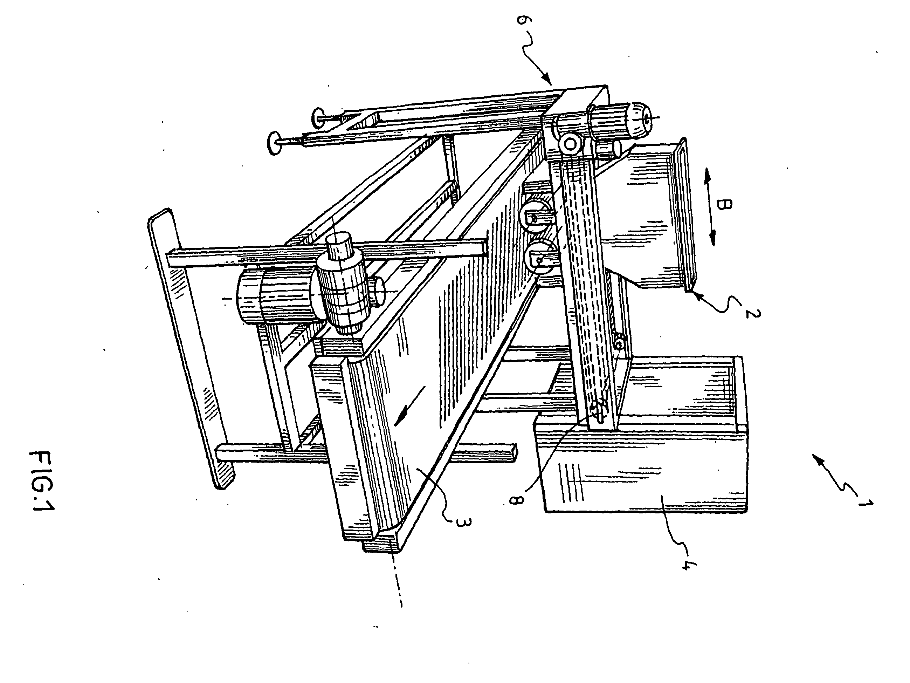

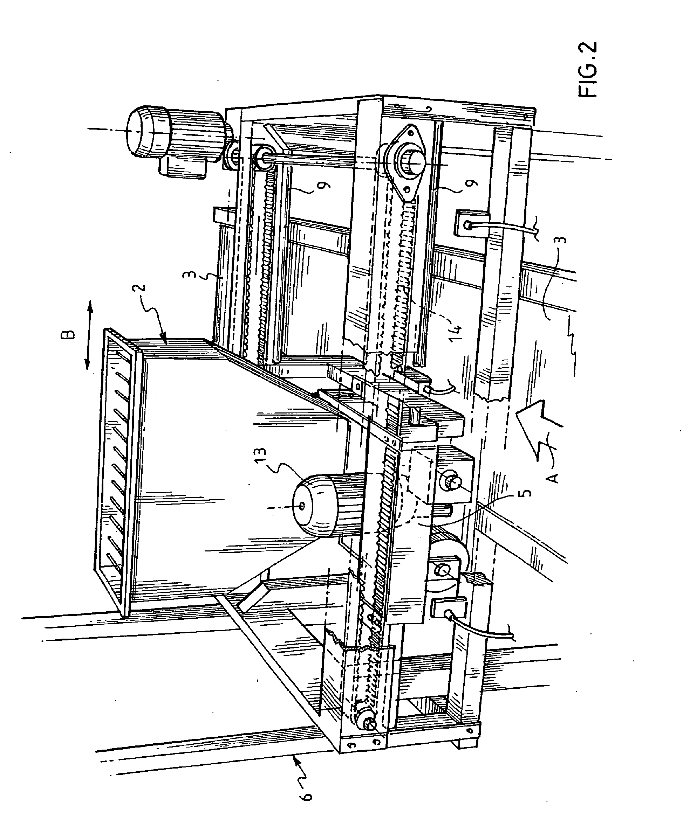

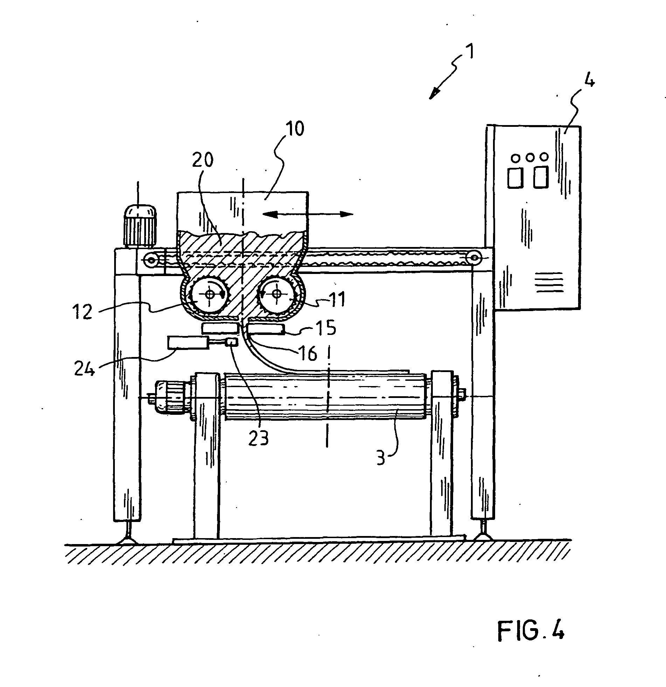

With reference to figures 1-4, an apparatus for the production of a multi-layered grid shaped short crust pastry bakery product is indicated in its totality with the number 1.

Such an apparatus comprises a short crust pastry dough mixture filament extruder 2 solidly mounted onto a carriage 5, a frame 6 supporting the extruder 2/carriage 5 block, and a conveyor belt 3 lying beneath the extruder 2/carriage 5 block to receive the extruded filaments. Frame 6 is set transversally with respect to conveyor belt 3 and has tracks 9 for the support and running of the extruder 2 / carriage 5 block.

In particular, conveyor belt 3 has a running direction A while the extruder 2/carriage 5 block is free to run along tracks 9 of frame 6 between two opposite end-of-run points 7, 8 according to an alternate movement with direction of movement B essentially perpendicular to running direction A of conveyor belt 3.

Apparatus 1 further comprises a motor 13 mounted on frame 6 to operate the movement of the extruder 2/carriage 5 block. The operation of such movement by motor 13 occurs indirectly through a pair of cogged-belts 14 connected to the motor and interacting with respective parts (not shown) of carriage 5.

Preferably, motor 13 is an asynchronous engine, in particular, of the brushless type.

Apparatus 1 further comprises an operation and control station 4 for motor 13 and hence for the rather conventional movement of the extruder 2/carriage 5 block. Station 4 can include a conventional management and electronic control system of operation of motor 13, for example by PLC.

Extruder 2 comprises a hopper 10, for loading the short crust pastry dough mixtures to be extruded, communicating beneath with a chamber 11. Extruder 2 further comprises a die 15 having a plurality of nozzles 16 placed beneath chamber 11 and in communication with it. Nozzles 16 of die 15 are preferably aligned along a direction parallel to the running direction of conveyor belt 3 and are substantially equidistant one from the other.

Chamber 11 is provided with two grooved rollers 12 positioned in parallel and made to rotate in opposite directions by means of which the dough mixture reaching chamber 11 is compressed and forced towards nozzles 16 of die 15.

To carry out the process according to the invention, short crust pastry dough mixture 20 is loaded into hopper 10 of extruder 2 and processed in chamber 11 by rollers 12. Rollers 12 provide for the compression of the dough mixture and force it towards nozzles 16 of die 15 from which dough mixture 20 is extruded in the form of filaments that are deposited on underlying conveyor belt 3.

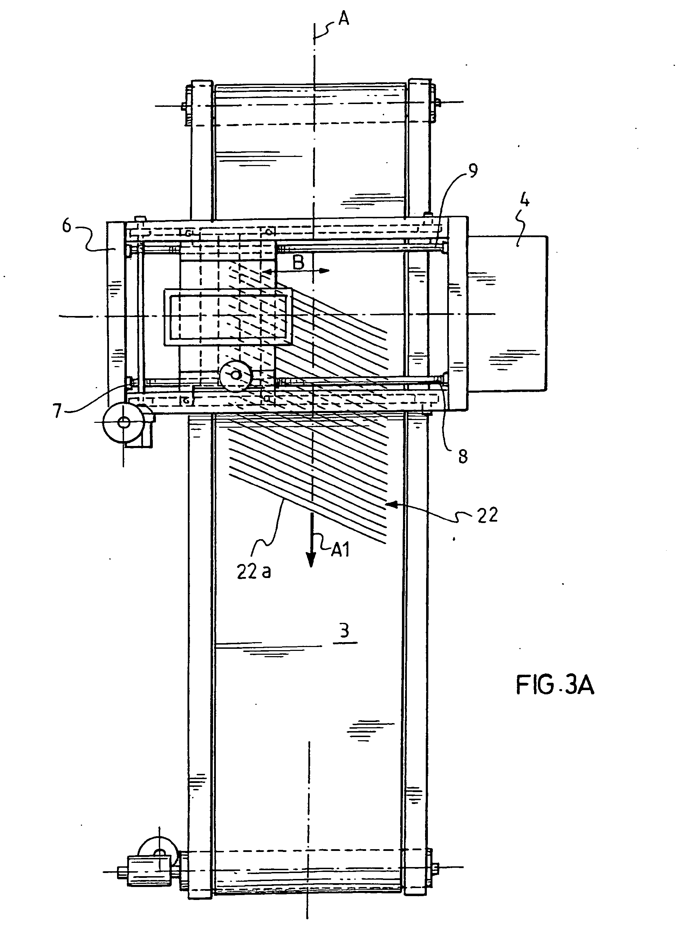

Now making reference to figure 3A, the process according to the invention initially involves the deposition onto conveyor belt 3, by extrusion of dough mixture 20, of a first layer 22 of filaments 22a that are substantially parallel and equidistant one from the other. According to an embodiment of the invention, such first layer 22 is created by means of successive deposits of adjacent bands of parallel filaments 22a on conveyor belt 3. Such bands are deposited on belt 3 by successive extrusions of dough mixture 20 from nozzles 16 with simultaneous movement of the extruder 2/carriage 5 block, from a starting position (in the specific case this coincides with the end-of-run 8) to an arrival position (in the specific case this coincides with the end-of-run 7), and of conveyor belt 3 along direction A in the specific running direction A1. The deposition of each band is completed by a cutting operation of filaments 22a extruded from nozzles 16 as soon as the extruder 2/carriage 5 block terminates movement upon reaching the arrival position (end-of-run 7). The filaments can be cut in a conventional manner preferably by a cutter 23 with a wire driven by a pneumatic cylinder 24.

At the end of each deposition of a band of filaments 22a, the extruder 2/carriage 5 block returns automatically to its starting position (end-of-run 8) to proceed to the extrusion of a successive band. In such a way, filaments 22a of first layer 22 are parallel to each other and inclined on the plane of conveyor belt 3. The inclination angle of said filaments 22a can be appropriately set by regulating the speed of movement of the extruder 2/carriage 5 block and the running speed of conveyor belt 3.

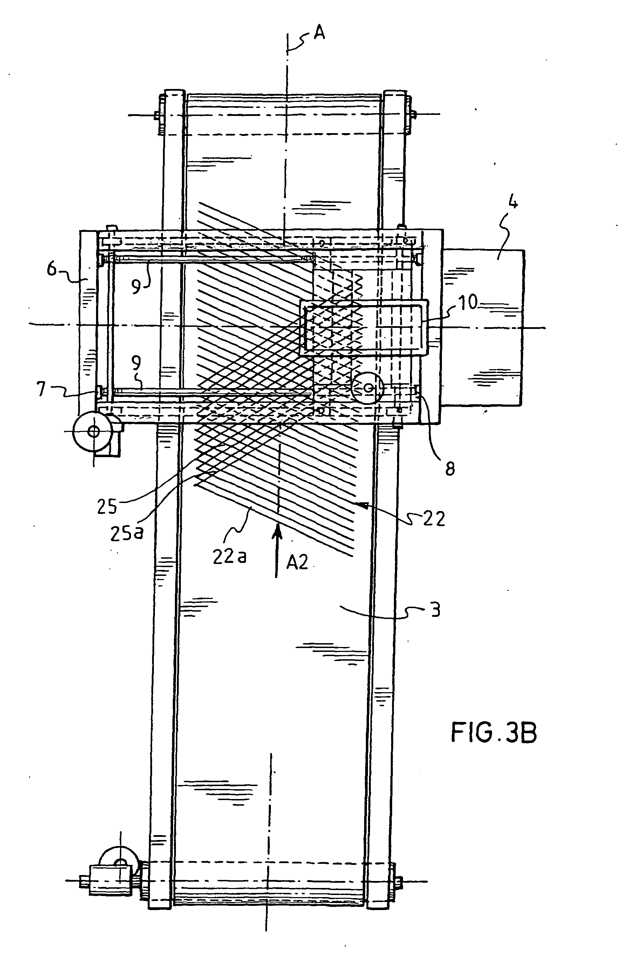

Now making reference to figure 3B, the process according to the invention continues with the deposition of a second layer 25 of filaments 25a substantially parallel and equidistant one from the other that cross filaments 22a of first layer 22. Second layer 25 of filaments 25a is created by means of successive deposits of adjacent bands of extruded filaments onto first layer 22 of filaments 22a.

More particularly, at the end of the formation of first layer 22 of filaments 22a, the running of conveyor belt 3 is inverted, with specific running direction A2 opposite to specific running direction A1 used to deposit the filament bands of first layer 22, and the process proceeds with the extrusion of successive bands of filaments 25a of dough mixture 20 from nozzles 16 in a similar way to what was described previously with the difference that the starting and arrival positions of the extruder 2 / carriage 5 block movement will be inverted with respect to the corresponding starting and arrival positions of the extruder 2 /carriage 5 movement used for the extrusion and deposition of each band of filaments 22a forming first layer 22.

Hence, in the present embodiment, in order to carry out the extrusion and deposition onto first layer 22 of filaments 22a of the bands constituting second layer 25 of filaments 25a, the starting position of the extruder 2/carriage 5 block movement will be the end-of-run point 7 and the arrival position, the end-of-run point 8. Furthermore, at the end of each deposition of a band of filaments 25a, the extruder 2/carriage 5 block returns automatically to its starting position (end-of-run 7) to proceed to the extrusion of a successive band.

This achieves the desired crossing over of filaments 25a of second layer 25 with filaments 22a of first layer 22.

For the deposition of one or more layers of successive filaments on second layer 25 of filaments 25a, the process is analogous to that previously described, repeating, according to need, the deposition operations for first layer 22 of filaments 22a for what concerns the deposition of successive odd order filament layers and the deposition operations for second layer 25 of filaments 25a for what concerns the deposition operations for successive even order filament layers.

The final effect deriving from said operations will thus be that of creating a semi-finished multi-layered grid-structured product in which the filaments of each layer are substantially parallel to each other and the filaments of each pair of successive superimposed layers cross over each other.

It is preferable, in the process according to the invention, that the running speed of the conveyor belt along direction A (in specific direction A1 or A2) and the speed of movement of the extruder 2/carriage 5 block are kept constant at a set value in all of the filament layer extrusion and deposition steps so that the directions of filament extension of each pair of successive superimposed filament layers will be essentially perpendicular to one another.

It should be noted that in the various steps of the process all said movements of conveyor belt 3 and extruder 2/carriage 5 block can take place automatically and correctly, thanks to the control system at station 4. In particular, such a control system allows the regulation of the appropriate speed and movement times of the extruder 2/carriage 5 block and of conveyor belt 3 according to a set program and also guarantees the correct phase setting of the extruder 2/carriage 5 block prior to each filament extrusion and deposition operation.

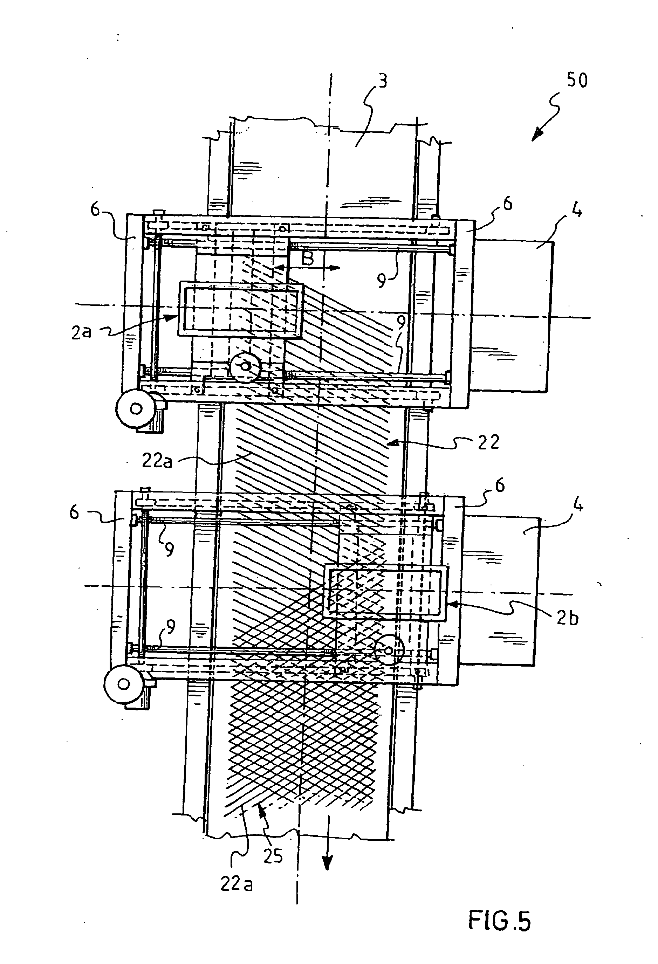

Figure 5 describes another apparatus according to a preferred embodiment of the process according to the invention, globally indicated by 50. Structural elements that are identical or equivalent from the functional point view to those of the apparatus of figures 1-4 will be given the same reference numbers, in figure 5.

Apparatus 50 differs from the one described above substantially because it exhibits a plurality of extruders along the track of conveyor belt 3, the structural and functional characteristics of which are completely analogous to those of extruder 2 of apparatus 1.

For the sake of simplicity, figure 5 shows, schematically, the two extruders 2a and 2b arranged in series along conveyor belt 3 with the obvious understanding that the number of such extruders can be increased at will depending on contingent and specific needs. Figure 5 also includes schematic representations of the components of support, movement and control for each of extruders 2a and 2b, such components being entirely equivalent to those previously described for extruder 2 of apparatus 1.

In apparatus 50 drawn in figure 5, each of extruders 2a and 2b is aptly programmed to extrude a predetermined short crust pastry dough mixture loaded into it and to deposit, on conveyor belt 3, a set filament layer forming the end product.

Thus for example, extrusion device 2a can be programmed to extrude and deposit a first layer 22 of filaments 22a on belt 3, as previously described, and extrusion device 2b can be programmed to extrude and deposit, as previously described, a second layer 25 of filaments 25a onto first layer 22 of filaments 22a. Optional successive layers of short crust pastry filaments for deposition onto second layer 25 may be supplied by means of further extrusion devices downstream from extruder 2b.

In such a way, thanks to the presence of a plurality of extrusion devices, each able to extrude and deposit a respective layer of filaments of short crust pastry, the process according to the invention may be advantageously carried out continuously and with reduced production times as there is no need to invert the running direction of conveyor belt 3 between the end of one filament layer deposition and the beginning of the deposition of a successive layer.

Furthermore, it is possible to include other apparatuses among the extrusion devices, for example casting devices (for example of chocolate), distributors of grains, glazing devices or anything other that gives the desired characteristics to the end product and between the layers of short crust pastry filaments.

It should also be noted that the extruders can be loaded, to advantage, with short crust pastry dough mixtures differing in one or more organoleptic characteristics, for example color or taste, conferred by the specific components present in the respective dough mixture compositions. In this way it is possible to confer different organoleptic characteristics to single filament layers thus increasing the manufacturing options of the final multi-layered grid product according to the invention.

It is also possible to confer different organoleptic characteristics to the filaments of a given layer by loading dough mixtures of different organoleptic characteristics into distinct zones of the loading hopper of the extruder associated with forming said layer. Such distinct zones may be created by one or more partition walls in the loading hopper of the extruder.

The semi-finished multi-layered grid shaped product obtained on conveyor belt 3 is sent on to an oven for baking and after baking it is conventionally cut so as to obtain the final bakery products according to the invention.

Such bakery products can be consumed as such, constituting for example three dimensional grid-structured biscuits characterized by a novel alternation of pastry and gaps, a pleasant sensation of light taste and flavor on the palate, an improved ease of swallowing and digestibility.

Alternatively, the bakery product according to the invention may be used in other applications like for example as the components of a filled wafer where, advantageously, structural differences due to the association of components of different palatability can be perceived.

Furthermore, the product according to the invention may be used prior to baking in conjunction with other products either as decoration or as a structural association component for these products (for example container top for custards or particulates of various structures).

### Example

A short crust pastry dough mixture was prepared using a conventional multi-step kneading process, the ingredients of which are given in the following table 1, together with the respective weight percentages.

**TABLE 1**

| **Ingredients** | **% by weight** |
|---|---|
| Flour | 43.38 |
| Starch | 3.77 |
| Sugar | 22.28 |
| Margarine 3% | 12.25 |
| Glucose syrup | 3.65 |
| Powdered egg-white | 2.21 |
| Egg yolk | 3.65 |
| Water | 5.99 |
| Dietary fibers | 1.88 |
| Flavorings | 0.08 |
| Lecithin | 0.86 |
| Total | 100 |

To make the dough mixture, the aforementioned ingredients were mixed together in three steps in a vertical mixer provided with suitable mixing means to ensure well structured creaming. In the first step, sugar, margarine, glucose syrup, lecithin and about 30% egg yolk and 30% water were mixed together. This was followed, in the second step, by the addition of the remaining quantity of water and egg yolk and then, in the third step, the mixing was completed by adding flour, starch, dietary fibers and flavorings.

In this way, a soft, elastic and lump-free short crust pastry dough mixture was obtained.

The short crust pastry dough mixture was loaded into an extruder, as previously described, having a plurality of nozzles 4 mm in diameter and extruded from said nozzles to form a number of superimposed filament layers according to the previously described process, thus obtaining a semi-finished product in the shape of a three-dimensional grid.

The extruder moved at a speed of 1.5 m/minute and the grooved rollers rotated at a speed of 6 rpm. The conveyor belt was made to run during the deposition steps of the single short crust pastry filament layers at a speed of 1 m/minute.

The semi-finished three-dimensional grid shaped product was baked in an oven at a working temperature of 180 °C for a time of 8-12 minutes (depending on the number of superimposed filament layers) resulting in, upon leaving the oven, a short crust pastry product in the shape of a three-dimensional grid according to the invention. Said product was portioned to form a number of biscuits 7 cm x 4 cm in size exhibiting optimal organoleptic characteristics, ease to swallow, and a pleasant sensation of light taste and flavor.

## Claims

1. Process for the production of a bakery product in the shape of a multi-layered grid comprising the steps of:
a) preparing at least one short crust pastry dough mixture (20) comprising dietary fibers in 1% to 6 % by weight on the weight of the dough mixture and at least one phospholipid in 0.5% to 3% by weight on the weight of the dough mixture,
b) forming, by extrusion of said at least one dough mixture (20), a number of superimposed layers (22,25) of short crust pastry dough mixture filaments (22a,25a) in which the filaments (22a,25a) of each layer (22,25) are extended along a set direction and in which each pair of successively superimposed layers (22,25) has a different extension direction of the respective short crust pastry filaments (22a,25a) in such a way that each filament (25a) of the upper layer (25) of said pair of layers (22,25) crosses the filaments (22a) of the lower layer (22) of said pair of layers, obtaining in such a way a semi-finished product in the shape of a multi-layer grid,
c) cooking said semi-finished product in a baking oven.

2. Process according to claim 1, in which said dietary fibers are insoluble cellulose-based dietary fibers.

3. Process according to claim 1 or claim 2, in which the said at least one dough mixture (20) has a fat content in the range of 10-16% by weight on the dough mixture weight.

4. Process according to any one of the preceding claims, in which said at least one phospholipid is present in percentages of between 0.5 and 3% by weight on the dough mixture weight.

5. Process according to claim 4, in which said at least one phospholipid is lecithin.

6. Process according to any one of the preceding claims in which said at least one dough mixture (20) further comprises protein components in percentages between 1% and 6% by weight on the dough mixture weight.

7. Process according to claim 6, in which said protein components are selected among the group comprising powdered egg white, powdered milk and plant proteins.

8. Process according to any one of the preceding claims in which said at least one dough mixture (20) has a compression value measured by an SMS compressimeter of between 3.2N and 6 N.

9. Process according to any one of the preceding claims, in which the preparation of said at least one dough mixture (20) includes the mixing of the dough mixture components in a number of steps, the components undergoing mixing including parts of liquid components, in at least some of said steps.

10. Process according to any one of the preceding claims, in which said formation step of a number of superimposed layers (22,25) of short crust pastry dough mixture filaments is carried out by means of an apparatus (1) comprising at least one extruder (2) having a chamber (11) equipped for the compression of the dough mixture in overhead communication with a loading hopper (10) of said at least one dough mixture (20) and in communication underneath with an extrusion die (15) equipped with a plurality of nozzles (16) for the extrusion of filaments of dough mixture, and a conveyor belt (3) placed underneath said extruder (2), said at least one extruder (2) being mobile according to an alternating movement between two end-of-run positions (7,8) and the conveyor belt having a running direction (A) substantially perpendicular to the direction of movement (B) of the extruder.

11. Process according to claim 10, in which said chamber (11) comprises two grooved rollers (12) placed parallel to each other and rotating in opposite directions, between which said at least one dough mixture (20) is compressed.

12. Process according to claim 10 or 11, in which said formation step of a number of superimposed layers (22,25) of short crust pastry dough mixture filaments (22a, 25a) comprises the following operations:
a) loading of said at least one dough mixture in said at least one extruder (2) by means of said loading hopper (10),
b) compressing said dough mixture (20) in said compression chamber (11) of said at least one extruder (2) and extruding the dough mixture (20) from said nozzles so as to form a first layer (22) of filaments (22a) substantially parallel to each other on said conveyor belt (3),
c) continuing the compression and extrusion of said at least one dough mixture (20) in said at least one extruder (2) so as to form a second layer (25) of substantially parallel filaments (25a) on said first layer (22) of filaments (22a) in which the filaments (25a) of the second layer (25) cross over the filaments (22a) of said first layer (22),
d) optionally repeating the above mentioned operations at points b) and c) in alternating sequence depending on the number of dough mixture filament layers desired.

13. Process according to claim 12, in which the formation of the first layer (22) of filaments (22a) as in step b), and optionally of successive odd order filament layers, is carried out by extrusion of successive bands of filaments with simultaneous movement of the extruder (2), at a set speed from a starting end-of-run position (8) to an arrival end-of-run position (7), and of the conveyor belt (3) along direction (A) in the specific running direction (A1).

14. Process according to claim 12, in which the formation of the second layer (25) of filaments (25a) as in step c) and optionally of successive even order layers of dough mixture filaments is carried out by extrusion of successive bands of dough mixture filaments with the movement of the extruder (2) from the arrival (7) to the starting position (8) and of the conveyor belt (3) along direction (A) with specific running direction (A2) opposite the specific running direction (A1).

15. Process according to any one of the preceding claims from 12 to 14, in which, for the aforementioned steps b), c) and optionally d), the running speed of the conveyor belt along direction A (with specific running direction A1 or A2) and the speed of movement of the extruder 2/carriage 5 block are kept constant at a set value.

16. Process according to claim 12, in which said at least one extruder is a plurality of extruders (2a, 2b), each extruder being used to form a respective layer of filaments of short crust pastry dough mixture by extrusion of successive bands of dough mixture filaments.

17. Process according to claim 16, in which each extruder is moved from an end-of-run starting position (8 or 7) to an end-of-run arrival position (7 or 8) for the extrusion of said successive bands of filaments forming a respective layer of dough mixture filaments while said conveyor belt (3) runs along said running direction (A), the starting (8 or 7) and arrival (7 or 8) end-of-run positions for the movement of each pair of adjacent extruders being inverted one to the other so as to achieve filament crossing over between successive superimposed layers.

18. Process according to any one of the preceding claims from 11 to 17, in which said at least one extruder (2) is moved at a constant speed of between 0.5 and 5 m/minute, said grooved rollers (12) of the dough mixture compression chamber (11) are made to rotate at a speed of between 1 and 10 rpm and said conveyor belt (3) is made to run during the deposition steps of the individual layers of short crust pastry filaments at a speed of between 0.5 and 5 m/minute.

19. Bakery product comprising a number of superimposed layers (22,25) of filaments (22a,25a) of extruded short crust pastry, each layer (22,25) having a plurality of filaments (22a,25a) of short crust pastry extended along a set direction and each pair of successively superimposed layers (22,25) having a different direction of extension of the respective filaments (22a,25a) of short crust pastry so that each filament (25a) of the upper layer (25) of said pair of layers (22,25) crosses the filaments (22a) of the lower layer (22) of said pair of layers (22,25) thus defining a reticular or three-dimensional grid structure.

20. Bakery product according to claim 19, in which the directions of extension of the filaments (22a,25a) of each pair of successive superimposed filament layers (22,25) are substantially perpendicular to each other.

21. Apparatus for the production of a bakery product in the shape of a multi-layered grid comprising at least one extruder (2a, 2b) having a chamber (11) for the compression of the dough mixture in overhead communication with a loading hopper (10) of said at least one dough mixture and in communication below with an extrusion die (15) equipped with a plurality of nozzles (16) for the extrusion of dough mixture filaments, and a conveyor belt (3) placed underneath said at least one extruder (2), said at least one extruder (2) being mobile in alternate movement between two end-of-run positions (7,8) and said conveyor belt having a running direction (A) substantially perpendicular to the direction of movement of said at least one extruder.

22. Apparatus according to claim 21, in which said at least one extruder consists of a plurality of extruders (2a,2b) arranged in series above said conveyor belt (3).

23. Apparatus according to claim 21 or 22, in which said chamber (11) exhibits two grooved rollers (12) arranged in parallel one to the other and made to rotate in opposite directions between which said at least one dough mixture (20) is compressed.

24. Apparatus according to any one of claims 21 to 23 in which said nozzles (16) of die (15) are circular in cross-section and with a diameter greater than 3 mm.

## Patentansprüche

1. Verfahren zur Herstellung eines Backwarenerzeugnisses in Form eines mehrschichtigen Gitters, umfassend die Schritte:
a) Herstellen mindestens eines mürbeteigartigen Teiggemischs (20), umfassend 1 Gew.-% bis 6 Gew.-% Ballaststoffe, bezogen auf das Gewicht des Teiggemischs, und mindestens 0,5 Gew.-% bis 3 Gew.-% Phospholipid, bezogen auf das Gewicht des Teiggemischs,
b) Bilden einer Anzahl von übereinander liegenden Schichten (22, 25) aus mürbeteigartigen Teiggemischfäden (22a, 25a) mittels Extrusion des mindestens einen Teiggemischs (20), wobei die Fäden (22a, 25a) jeder Schicht (22, 25) in einer bestimmten Richtung verlaufen und wobei jedes Paar von aufeinander folgenden, übereinander liegenden Schichten (22, 25) eine unterschiedliche Verlaufsrichtung der jeweiligen mürbeteigartigen Fäden (22a, 25a) derart aufweist, dass jeder Faden (25a) der oberen Schicht (25) des Paars von Schichten (22, 25) die Fäden (22a) der unteren Schicht (22) des Paars von Schichten kreuzt, wobei auf diese Weise ein halbfertiges Produkt in Form eines mehrschichtigen Gitters erhalten wird,
c) Backen des halbfertigen Produkts in einem Backofen.

2. Verfahren nach Anspruch 1, wobei die Ballaststoffe unlösliche Ballaststoffe auf Cellulosebasis sind.

3. Verfahren nach Anspruch 1 oder Anspruch 2, wobei das mindestens eine Teiggemisch (20) einen Fettgehalt im Bereich von 10 - 16 Gew.-%, bezogen auf das Gewicht des Teiggemischs, hat.

4. Verfahren nach einem der vorhergehenden Ansprüche, wobei das mindestens eine Phospholipid in prozentualen Anteilen zwischen 0,5 und 3 Gew.-%, bezogen auf das Gewicht des Teiggemischs, vorhanden ist.

5. Verfahren nach Anspruch 4, wobei das mindestens eine Phospholipid Lecithin ist.

6. Verfahren nach einem der vorhergehenden Ansprüche, wobei das mindestens eine Teiggemisch (20) weiter Proteinkomponenten in prozentualen Anteilen zwischen 1 Gew.-% und 6 Gew.-%, bezogen auf das Gewicht des Teiggemischs, umfasst.

7. Verfahren nach Anspruch 6, wobei die Proteinkomponenten aus der Gruppe umfassend Eiweißpulver, Milchpulver und Pflanzenproteine ausgewählt sind.

8. Verfahren nach einem der vorhergehenden Ansprüche, wobei das mindestens eine Teiggemisch (20) einen Kompressionswert zwischen 3,2 N und 6 N aufweist, der mittels eines SMS-Kompressimeters gemessen wird.

9. Verfahren nach einem der vorhergehenden Ansprüche, wobei die Herstellung des mindestens einen Teiggemischs (20) das Mischen der Teiggemischkomponenten in einer Anzahl von Schritten umfasst, wobei die dem Mischen ausgesetzten Komponenten zumindest bei einigen der Schritte Anteile von flüssigen Komponenten aufweisen.

10. Verfahren nach einem der vorhergehenden Ansprüche, wobei der Ausbildungsschritt einer Anzahl von übereinander liegenden Schichten (22, 25) aus mürbeteigartigen Teiggemischfäden mittels einer Vorrichtung (1) durchgeführt wird, die mindestens einen Extruder (2) mit einer Kammer (11), die zur Kompression des Teiggemischs in oben liegender Verbindung mit einem Fülltrichter (10) des mindestens einen Teiggemischs (20) und in unten liegender Verbindung mit einer Extrusionsform (15) ausgestattet ist, die zur Extrusion der Teiggemischfäden mit mehreren Düsen (16) ausgestattet ist, und ein Förderband (3) umfasst, das sich unterhalb des Extruders (2) befindet, wobei der mindestens eine Extruder (2) gemäß einer Hin- und Her-Bewegung zwischen zwei Laufendpositionen (7, 8) beweglich ist und das Förderband eine Laufrichtung (A) hat, die weitgehend senkrecht zur Bewegungsrichtung (B) des Extruders verläuft.

11. Verfahren nach Anspruch 10, wobei die Kammer (11) zwei gerillte Walzen (12) umfasst, die parallel zueinander angeordnet sind und sich in entgegengesetzter Richtung drehen und zwischen denen das mindestens eine Teiggemisch (20) komprimiert wird.

12. Verfahren nach Anspruch 10 oder 11, wobei der Ausbildungsschritt einer Anzahl von übereinander liegenden Schichten (22, 25) von mürbeteigartigen Teiggemischfäden (22a, 25a) die folgenden Vorgänge umfasst:
a) Beschicken des mindestens einen Extruders (2) mit dem mindestens einen Teiggemisch mittels des Fülltrichters (10),
b) Komprimieren des Teiggemischs (20) in der Kompressionskammer (11) des mindestens einen Extruders (2) und Extrudieren des Teiggemischs (20) aus den Düsen, um so eine erste Schicht (22) aus Fäden (22a) zu bilden, die zueinander auf dem Förderband (3) weitgehend parallel sind,
c) Fortführen der Kompression und Extrusion des mindestens einen Teiggemischs (20) in dem mindestens einen Extruder (2), um eine zweite Schicht (25) aus weitgehend parallelen Fäden (25a) auf der ersten Schicht (22) aus Fäden (22a) zu bilden, wobei die Fäden (25a) der zweiten Schicht (25) die Fäden (22a) der ersten Schicht (22) überkreuzen,
d) wahlweises Wiederholen der oben erwähnten Vorgänge bei Punkt b) und c) in Wechselfolge abhängig von der Anzahl der gewünschten Teiggemischfadenschichten.

13. Verfahren nach Anspruch 12, wobei die Ausbildung der ersten Schicht (22) aus Fäden (22a) wie im Schritt b) und wahlweise aus aufeinander folgenden Fadenschichten ungerader Ordnung durch Extrusion von aufeinander folgenden Fadengruppen unter gleichzeitiger Bewegung des Extruders (2) mit einer bestimmten Geschwindigkeit von der Ausgangs-Laufendposition (8) bis zu einer Ziel-Laufendposition (7) und des Förderbands (3) entlang der Richtung (A) in der speziellen Laufrichtung (A1) durchgeführt wird.

14. Verfahren nach Anspruch 12, wobei die Ausbildung der zweiten Schicht (25) aus Fäden (25a) wie im Schritt c) und wahlweise aus aufeinander folgenden Teiggemischfadenschichten geradzahliger Ordnung durch Extrusion von aufeinander folgenden Teiggemischfadengruppen unter Bewegung des Extruders (2) von der Ziel- (7) zur Ausgangs-Position (8) und des Förderbands (3) entlang der Richtung (A) mit der speziellen Laufrichtung (A2) entgegengesetzt zur speziellen Laufrichtung (A1) durchgeführt wird.

15. Verfahren nach einem der vorhergehenden Ansprüche 12 bis 14, wobei für die zuvor erwähnten Schritte b), c) und wahlweise d) die Laufgeschwindigkeit des Förderbands entlang der Richtung A (mit spezieller Laufrichtung A1 oder A2) und die Bewegungsgeschwindigkeit des Extruder 2/Schlitten 5-Blocks bei einem bestimmten Wert konstant gehalten werden.

16. Verfahren nach Anspruch 12, wobei der mindestens eine Extruder mehrere Extruder (2a, 2b) umfasst, wobei jeder Extruder so verwendet wird, dass eine jeweilige Fadenschicht aus mürbeteigartigem Teiggemisch durch Extrusion von aufeinander folgenden Teiggemischfadengruppen gebildet wird.

17. Verfahren nach Anspruch 16, wobei zur Extrusion der aufeinander folgenden Fadengruppen, die eine jeweilige Schicht der Teiggemischfäden bilden, jeder Extruder von einer Ausgangs-Laufendposition (8 oder 7) zu einer Ziel-Laufendposition (7 oder 8) bewegt wird, während das Förderband (3) sich entlang der Laufrichtung (A) bewegt, wobei die Ausgangs- (8 oder 7) und Ziel- (7 oder 8) Laufendpositionen zur Bewegung jedes Paars von benachbarten Extrudern zueinander umgekehrt werden, um so eine Fadenkreuzung zwischen aufeinander folgenden, übereinander liegenden Schicht zu erzielen.

18. Verfahren nach einem der vorhergehenden Ansprüche 11 bis 17, wobei der mindestens eine Extruder (2) mit konstanter Geschwindigkeit zwischen 0,5 und 5 m/Minute bewegt wird, wobei die gerillten Walzen (12) der Teiggemisch-Kompressionskammer (11) so ausgestaltet sind, dass sie sich mit einer Geschwindigkeit zwischen 1 und 10 UpM drehen, und das Förderband (3) so ausgebildet ist, dass es während der Auflegeschritte der einzelnen Schichten aus mürbeteigartigen Fäden mit einer Geschwindigkeit zwischen 0,5 und 5 m/Minute läuft.

19. Backwarenerzeugnis, umfassend eine Anzahl von übereinander liegenden Schichten (22, 25) aus Fäden (22a, 25a) aus extrudiertem mürbeteigartigem Teig, wobei jede Schicht (22, 25) mehrere Fäden (22a, 25a) aus mürbeteigartigem Teig aufweist, die entlang einer bestimmten Richtung verlaufen, und jedes Paar von aufeinander folgenden, übereinander liegenden Schichten (22, 25) eine unterschiedliche Verlaufsrichtung der jeweiligen Fäden (22a, 25a) aus mürbeteigartigem Teig aufweist, so dass jeder Faden (25a) der oberen Schicht (25) des Paars von Schichten (22, 25) die Fäden (22a) der unteren Schicht (22) des Paars von Schichten (22, 25) kreuzt, um so einen netzartigen oder dreidimensionalen Gitteraufbau zu bilden.

20. Backwarenerzeugnis nach Anspruch 19, wobei die Verlaufsrichtungen der Fäden (22a, 25a) von jedem Paar von aufeinander folgenden, übereinander liegenden Fadenschichten (22, 25) weitgehend senkrecht zueinander sind.

21. Vorrichtung zur Herstellung eines Backwarenerzeugnisses in Form eines mehrschichtigen Gitters, umfassend mindestens einen Extruder (2a, 2b) mit einer Kammer (11) zum Komprimieren des Teiggemischs in oben liegender Verbindung mit einem Fülltrichter (10) des mindestens einen Teiggemischs und in unten liegender Verbindung mit einer Extrusionsform (15), die zur Extrusion von Teiggemischfäden mit mehreren Düsen (16) ausgestattet ist, und ein Förderband (3), das unter dem mindestens einen Extruder (2) angeordnet ist, wobei der mindestens eine Extruder (2) in Hin- und Her-Bewegung zwischen zwei Laufendpositionen (7, 8) beweglich ist und das Förderband eine Laufrichtung (A) aufweist, die weitgehend senkrecht zur Bewegungsrichtung des mindestens einen Extruders ist.

22. Vorrichtung nach Anspruch 21, wobei der mindestens eine Extruder aus mehreren Extrudern (2a, 2b) besteht, die in Reihe über dem Förderband (3) angeordnet sind.

23. Vorrichtung nach Anspruch 21 oder 22, wobei die Kammer (11) zwei gerillte Walzen (12) besitzt, die parallel zueinander angeordnet und so ausgebildet sind, dass sie sich in entgegengesetzten Richtungen drehen, und zwischen denen das mindestens eine Teiggemisch (20) komprimiert wird.

24. Vorrichtung nach einem der Ansprüche 21 bis 23, wobei die Düsen (16) der Form (15) im Querschnitt rund sind und einen Durchmesser von über 3 mm aufweisen.

## Revendications

1. Procédé de production d'un produit de boulangerie en forme de grille multicouche comprenant les étapes suivantes :
a) préparer au moins un mélange de pâte brisée (20) comprenant des fibres alimentaires de 1 % à 6 % en poids sur le poids du mélange de la pâte et au moins un phospholipide de 0,5 % à 3 % en poids sur le poids du mélange de la pâte,
b) former, par extrusion dudit au moins un mélange de pâte (20), plusieurs couches superposées (22,25) de filaments de mélange de pâte brisée (22a, 25a), où les filaments (22a, 25a) de chaque couche (22,25) s'étendent le long d'une direction donnée et où chaque paire de couches superposées successivement (22, 25) a une direction d'extension différente des filaments de pâte brisée respectifs (22a, 25a) de telle manière que chaque filament (25a) de la couche supérieure (25) de ladite paire de couches (22,25) croise les filaments (22a) de la couche inférieure (22) de ladite paire de couches, pour obtenir de cette manière un produit semi-fini de la forme d'une grille multicouche,
c) faire cuire ledit produit semi-fini dans un four.

2. Procédé selon la revendication 1, dans lequel lesdites fibres alimentaires sont des fibres alimentaires à base de cellulose insolubles.

3. Procédé selon la revendication 1 ou 2, dans lequel ledit au moins un mélange de pâte (20) a une teneur en graisses dans la plage de 10-16 % en poids sur le poids du mélange de la pâte.

4. Procédé selon l'une quelconque des revendications précédentes, dans lequel ledit au moins un phospholipide est présent à des pourcentages entre 0,5 et 3 % en poids sur le poids du mélange de la pâte.

5. Procédé selon la revendication 4, dans lequel ledit au moins un phospholipide est de la lécithine.

6. Procédé selon l'une quelconque des revendications précédentes, dans lequel ledit au moins un mélange de pâte (20) contient en outre des composants protéines en un pourcentage compris entre 1 % et 6 % en poids sur le poids du mélange de la pâte.

7. Procédé selon la revendication 6, dans lequel lesdits composants protéines sont choisis parmi le groupe comprenant du blanc d'oeuf en poudre, du lait en poudre et des protéines végétales.

8. Procédé selon l'une quelconque des revendications précédentes, dans lequel ledit au moins un mélange de pâte (20) a une valeur de compression mesurée par un compressiomètre SMS comprise entre 3,2 N et 6 N.

9. Procédé selon l'une quelconque des revendications précédentes, dans lequel la préparation dudit au moins un mélange de pâte (20) comprend l'étape consistant à mélanger les composants du mélange de la pâte en plusieurs étapes, les composants subissant le mélange comprenant en partie des composants liquides, dans au moins certaines desdites étapes.

10. Procédé selon l'une quelconque des revendications précédentes, dans lequel ladite étape de formation de plusieurs couches superposées (22, 25) de filaments de mélange de pâte brisée est effectuée au moyen d'un appareil (1) comprenant au moins une extrudeuse (2) ayant un compartiment (11) équipé pour la compression du mélange de pâte en communication au-dessus avec une trémie de charge (10) dudit au moins un mélange de pâte (20) et en communication en dessous avec une filière d'extrusion (15) équipée d'une multitude de buses (16) pour l'extrusion de filaments de mélange de pâte, et une bande transporteuse (3) placée en dessous de ladite extrudeuse (2), ladite au moins une extrudeuse (2) étant mobile selon un mouvement de va-et-vient entre deux positions de fin de course (7, 8) et la bande transporteuse ayant une direction de course (A) essentiellement perpendiculaire à la direction de mouvement (B) de l'extrudeuse.

11. Procédé selon la revendication 10, dans lequel ledit compartiment (11) comprend deux cylindres rainurés (12) placés parallèlement l'un à l'autre et pivotant dans des directions opposées, entre lesquels ledit au moins un mélange de pâte (20) est compressé.

12. Processus selon la revendication 10 ou 11, dans lequel ladite étape de formation de plusieurs couches superposées (22, 25) de filaments de mélange de pâte brisée (22a, 25a) comprend les opérations suivantes :
a) charger ledit au moins un mélange de pâte dans ladite au moins une extrudeuse (2) au moyen de ladite trémie de charge (10),
b) compresser ledit mélange de pâte (20) dans ledit compartiment de compression (11) de ladite au moins une extrudeuse (2) et extruder le mélange de pâte (20) desdites buses afin de former une première couche (22) de filaments (22a) essentiellement parallèles les uns aux autres sur ladite bande transporteuse (3),
c) continuer la compression et l'extrusion dudit au moins un mélange de pâte (20) dans ladite au moins une extrudeuse (2) de manière à former une deuxième couche (25) de filaments essentiellement parallèles (25a) sur ladite première couche (22) de filaments (22a), où les filaments (25a) de la deuxième couche (25) croisent les filaments (22a) de ladite première couche (22),
d) facultativement répéter les opérations citées ci-dessus aux points b) et c) en une séquence alternée selon le nombre de couches de filaments de mélange de pâte souhaité.

13. Procédé selon la revendication 12, dans lequel la formation de la première couche (22) de filaments (22a) comme dans l'étape b), et facultativement de couches successives de filaments d'ordre impair, est réalisée par extrusion de bandes successives de filaments avec un mouvement simultané de l'extrudeuse (2) à une vitesse donnée d'une position de départ en fin de course (8) à une position d'arrivée en fin de course (7) et de la bande transporteuse (3) dans la direction (A) dans la direction spécifique de fonctionnement (A1).

14. Procédé selon la revendication 12, dans lequel la formation de la deuxième couche (25) de filaments (25a) comme dans l'étape c), et facultativement de couches successives d'ordre pair de filaments de mélange de pâte, est réalisée par extrusion de bandes successives de filaments de mélange de pâte avec un mouvement simultané de l'extrudeuse (2), de la position d'arrivée (7) à la position de départ (8) et de la bande transporteuse (3) dans la direction (A) avec une direction spécifique de fonctionnement (A2) opposée à la direction spécifique de fonctionnement (A1).

15. Procédé selon l'une quelconque des revendications précédentes 12 à 14, dans lequel, pour les étapes précédemment citées b), c) et facultativement d), la vitesse de fonctionnement de la bande transporteuse dans la direction A (avec une direction spécifique de fonctionnement A1 ou A2) et la vitesse de mouvement de l'extrudeuse (2)/ bloc chariot 5 sont maintenues constantes à une valeur donnée.

16. Procédé selon la revendication 12, dans lequel ladite au moins une extrudeuse est constituée d'une multitude d'extrudeuses (2a, 2b), chaque extrudeuse étant utilisée pour former une couche respective de filaments de mélange de pâte brisée par extrusion de bandes successives de filaments de mélange de pâte.

17. Procédé selon la revendication 16, dans lequel chaque extrudeuse est déplacée d'une position de départ en fin de course (8 ou 7) à une position d'arrivée en fin de course (7 ou 8) pour l'extrusion desdites bandes successives de filaments formant une couche respective de filaments de mélange de pâte tandis que ladite bande transporteuse (3) fonctionne dans ladite direction de fonctionnement (A), les positions en fin de course de départ (8 ou 7) et d'arrivée (7 ou 8) étant disposées pour que le mouvement de chaque paire d'extrudeuses adjacentes soit inversé de l'une à l'autre afin d'obtenir des filaments croisés entre les couches superposées successives.

18. Procédé selon l'une quelconque des revendications précédentes 11 à 17, dans lequel ladite au moins une extrudeuse (2) se déplace à une vitesse constante comprise entre 0,5 et 5 m/minute, lesdits cylindres rainurés (12) du compartiment de compression du mélange de la pâte (11) sont conçus pour pivoter à une vitesse comprise entre 1 et 10 tours/minute et ladite bande transporteuse (3) est conçue pour fonctionner pendant les étapes de dépôt des couches individuelles de filaments de pâte brisée à une vitesse comprise entre 0,5 et 5 m/minute.

19. Produit de boulangerie comprenant plusieurs couches superposées (22, 25) de filaments (22a, 25a) de pâte brisée extrudée, chaque couche (22, 25) ayant une multitude de filaments (22a, 25a) de pâte brisée s'étendant dans une direction donnée et chaque paire de couches superposées successivement (22, 25) disposant d'une direction différente d'extension des filaments respectifs (22a, 25a) de pâte brisée de telle manière que chaque filament (25a) de la couche supérieure (25) de ladite paire de couches (22, 25) croise les filaments (22a) de la couche inférieure (22) de ladite paire de couches (22,25), définissant ainsi une structure de grille réticulaire ou tridimensionnelle.

20. Produit de boulangerie selon la revendication 19, dans lequel les directions d'extension des filaments (22a, 25a) de chaque paire de couches de filaments superposées (22, 25) sont essentiellement perpendiculaires les unes aux autres.

21. Appareil pour la production d'un produit de boulangerie en forme de grille multicouche comprenant au moins une extrudeuse (2a, 2b) ayant un compartiment (11) pour la compression du mélange de pâte en communication au-dessus avec une trémie de charge (10) dudit au moins un mélange de pâte et en communication en dessous avec une filière d'extrusion (15) équipée d'une multitude de buses (16) pour l'extrusion de filaments de mélange de pâte, et une bande transporteuse (3) placée en dessous de ladite au moins une extrudeuse (2), ladite au moins une extrudeuse (2) étant mobile dans un mouvement de va-et-vient entre deux positions de fin de course (7, 8) et ladite bande transporteuse ayant une direction de course (A) essentiellement perpendiculaire à la direction du mouvement de ladite au moins une extrudeuse.

22. Appareil selon la revendication 21, dans lequel ladite au moins une extrudeuse est constituée de plusieurs extrudeuses (2a, 2b) disposées en séries au dessus de ladite bande transporteuse (3).

23. Appareil selon la revendication 21 ou 22, dans lequel ledit compartiment (11) présente deux cylindres rainurés (12), disposés parallèlement l'un à l'autre et conçus pour pivoter dans des directions opposées, entre lesquels ledit au moins un mélange de pâte (20) est compressé.

24. Appareil selon l'une quelconque des revendications 21 à 23 dans lequel lesdites buses (16) de filière (15) sont circulaires en coupe transversale et ont un diamètre supérieur à 3 mm.
